# EUROPÄISCHE PATENTANMELDUNG

(11) **EP 1 731 016 A2**
(43) Veröffentlichungstag der Anmeldung: **13.12.2006**
(21) Anmeldenummer: 06004916.0
(22) Anmeldetag: 10.03.2006
(51) Int. Cl.: A01D 34/81, B60K 15/04

(54) **Rasenmäher**

(30) Priorität: 10.06.2005 EP 05012473; 24.01.2006 DE 102006003196
(71) Anmelder: Kress, Werner, D-89077 Ulm (DE)
(72) Erfinder: Kress, Werner, 89077 Ulm (DE)
(74) Vertreter: Sawodny, Michael-Wolfgang

(57) **Zusammenfassung**

Die Erfindung betrifft einen Rasenmäher; umfassend
- eine Schneideinrichtung, die ein Messer (9) aufweist;
- einen Motor (1), wobei
der Motor (1) eine Verbrennungskraftmaschine ist, dadurch gekennzeichnet, dass die Verbrennungskraftmaschine derart ausgestaltet ist, dass der Rasenmäher ohne Betriebsmittelverlust in allen möglichen Positionen aufstellbar ist.

## Beschreibung

Die Erfindung betrifft einen Rasenmäher, insbesondere einen handgeführten mit Motorantrieb durch einen Verbrennungsmotor. Dabei kommt als Verbrennungsmotor insbesondere ein Benzinmotor in Betracht.

Rasenmäher mit Verbrennungsmotoren sind aus einer Vielzahl von Schriften bekannt geworden, beispielsweise der DE 80 33 233 U. Rasenmäher gemäß dem Stand der Technik weisen eine Schneideinrichtung auf. Die Schneideinrichtung besteht vorzugsweise aus einem langgestreckten Messerblatt, das in der Mitte seiner Länge um eine vertikale Achse drehbar gelagert ist. Das Messerblatt ist an seinen beiden Längenabschnitten beidseits der genannten Drehachse jeweils mit einer Schneide versehen, der eine Längenabschnitt auf der einen Schmalkante, und der andere Längenabschnitt auf der gegenüberliegenden Schmalkante. Das Messerblatt ist in vielen Fällen im Wesentlichen horizontal angeordnet. Es kann auch eine gewisse Neigung gegen die Horizontalebene aufweisen, so dass die Schneideinrichtung nicht nur ihre Schneid- (oder Abschlag-) Funktion erfüllt, sondern auch eine Förderfunktion. Hierdurch wird ein Luftstrom erzeugt, der das abgeschlagene Gras in eine bestimmte Richtung fördert.

Bei den Rasenmähern gemäß dem Stand der ist die Abtriebswelle des Motors stets gleichzeitig die Antriebswelle des Messers So wird bei der DE 80 33 233 U die mit Windflügeln versehene Schneidvorrichtung direkt von der Antriebswelle des Motors angetrieben. Der in der DE 80 33 233 U beschriebene Rasenmäher weist des weiteren im den die Schneidvorrichtung aufnehmenden Raum begrenzenden Gehäusewand von dem Luftdruck abhängig arbeitende, selbsttätig öffnende und schließende Rückschlagventile angeordnet sind.

Durch solche selbsttätig wirkende Rückschlagventile wird gemäß der DE 80 33 233 U erreicht, dass in den Raum der Schneidvorrichtung zusätzliche Luft bei entstehendem Unterdruck eintreten kann und somit der Unterdruck aufgehoben wird. Je nach der Stärke des auftretenden Unterdruckes öffnen sich ein oder mehrere Rückschlagklappen automatisch, wobei dann die fehlende Luft von oben angesaugt wird.

Bei dem in der DE 80 33 233 U gezeigten Rasenmäher handelt es sich um einen handgeführten Rasenmäher, bei dem eine Bedienungsperson an einem Holm angreift, um den Rasenmäher über den Rasen hinweg zu führen und somit dessen Bewegungsbahn zu steuern. Außerdem bringt die Bedienungsperson über den Holm die Schubkraft zum Verfahren des Rasenmähers auf.

Das Gehäuse des Rasenmähers weist einen Auslass auf, durch welchen der grasführende Luftstrom austritt. Der Luftstrom kann dabei an einer Seite des Rasenmähers austreten - d. h. seitlich der Bewegungsbahn, die der Rasenmäher ausführt. In neuerer Zeit sind aber Rasenmäher im Allgemeinen mit Grasfangbehältern ausgestattet. Ein solcher Grasfangbehälter hat eine Öffnung, die dem genannten Auslass des Gehäuses entspricht, und die an das Gehäuse über den Gehäuseauslass angeschlossen ist. Der Grasfangbehälter befindet sich meist im hinteren Bereich des Gehäuses.

Der Grasfangbehälter kann einen Sack aus Gewebe oder anderen schlaffen Materialien aufweisen. Er kann aber auch aus einer Box mit starren Wänden bestehen. In jedem Falle ist die Wandung oder wenigstens ein Teil der Wandung des Grasfangbehälters luftdurchlässig. Handelt es sich um ein Gewebe, so ist dies von Natur aus porös. Handelt es sich um eine Box mit starren Wänden, so sind die Wände oder wenigstens einige der Wände perforiert. Bei Rasenmähern ohne Grasfangbehälter ist der Gehäuseauslass mit einer Klappe versehen, die um eine Schwenkachse schwenkbar gelagert ist. Der grasführende Luftstrom prallt gegen die Platte und öffnet diese, so dass der grasführende Luftstrom austreten kann.

Die Mahd wird aus dem Rasenmäher in einen Fangsack mit Hilfe von Luft gefördert.

Nachteilig bei den Rasenmähern gemäß dem Stand der Technik war, dass die Rasenmäher im Wesentlichen horizontal gelagert wurden.

Eine vertikale Lagerung eines Rasenmähers ist in der nachveröffentlichten EP 1561372 A1 beschrieben. Wird ein Rasenmäher mit einem herkömmlichen Verbrennungsmotor wie in der nachveröffentlichten EP 1561372 A1 beschrieben in eine im Wesentlichen vertikale Position aufgestellt, so hat dies den Nachteil, dass in der vertikalen Position Betriebsmittel wie Motoröl oder Kraftstoff austritt.

Ein weiterer Nachteil bei den Rasenmähern mit Verbrennungsmotor gemäß dem Stand der Technik war, dass die Rasenmäher nur mit verhältnismäßig hohem Kraftaufwand angelassen werden konnten und bei Servicearbeiten, wie beispielsweise dem Wechsel des Fangkorbes üblicherweise außer Betrieb gesetzt werden mussten.

Ein weiterer Nachteil bei den Rasenmähern gemäß dem Stand der Technik ist, dass die Mäher bei Schnitthöhen von 20mm und weniger, die Mäher Funktionsfähigkeit einbüßen, d.h. Schnitthöhen von weniger als 20mm konnten mit Mähern nicht effektiv, d.h. nicht mit ausreichender Mähleistung realisiert werden.

Der Erfindung liegt die Aufgabe zugrunde, die Nachteile des Standes der Technik zu überwinden und insbesondere einen Rasenmäher mit Verbrennungsmotor, anzugeben, der in beliebigen Positionen aufstellbar ist.

Gemäß einem weiteren Aspekt der Erfindung soll ein Rasenmäher angegeben werden, der sich gegenüber bekannten Rasenmähern durch eine verbesserte Bedienbarkeit auszeichnet und in beliebigen Positionen aufstellbar ist.

Des Weiteren soll ein Rasenmäher angegeben werden, der sich durch eine verbesserte Mähleistung auszeichnet

Insbesondere soll auch ein Rasenmäher angegeben werden mit den Schnitthöhen geringer als 20 mm ohne Beeinträchtigung der Funktionsfähigkeit des Mähers erreicht werden können.

Des Weiteren soll ein Rasenmäher angegeben werden, der in seiner Messerdrehzahl individuell anpassbar ist.

Gemäß einem ersten Aspekt der Erfindung wird die Aufgabe dadurch gelöst, dass die Verbrennungskraftmaschine derart ausgestaltet ist, dass der Rasenmäher mit Verbrennungskraftmaschine ohne Betriebsmittelverlust in allen möglichen Position aufstellbar ist, insbesondere auch in eine vertikale Position. Die im Stand der Technik bekannten Rasenmäher mit Verbrennungsmotor wurden bevorzugt nur in einer im Wesentlichen horizontalen Position aufgestellt, um den Ausfluss von Betriebsmittel wie Öl oder Kraftstoff zu verhindern. Durch die Verwendung einer Verbrennungskraftmaschine wie oben beschrieben, lässt sich der erfindungsgemäße Rasenmäher in einer bevorzugten Ausführungsform auch in eine aufrechte Position, d.h. in eine vertikale Position z.B. auf wenigstens drei Lagerpunkten oder einer Lagerfläche aufstellen. Dies ermöglicht gegenüber den Rasenmähern gemäß dem Stand der Technik eine besonders raumsparende Aufbewahrung.

Bevorzugt wird in einer ersten Ausgestaltung der Erfindung der Rasenmäher derart ausgestaltet, dass der Verbrennungsmotor mit einem Kraftstofftank ausgestattet ist, wobei der Kraftstofftank einen Verschlussdeckel umfasst. Um das Eindringen von Luft in der Betriebsposition in den Vergaser zu ermöglichen, enthält der Verschlussdeckel des Kraftstoffstanks eine Luftöffnung. Der Verschlussdeckel ist derart ausgeführt, dass in einer ersten Position, nämlich in der Betriebsposition diese Luftöffnung zur Atmosphäre hin freigegeben wird. Wird der Rasenmäher in eine Nicht-Betriebsposition verbracht, so ist der Verschlussdeckel derart ausgestaltet, dass in einer zweiten Position die Luftöffnung verschlossen wird. Dies ermöglicht das Aufstellen des Rasenmähers in die unterschiedlichsten Positionen, insbesondere auch in eine vertikale Position, bspw. auf dem Grasfangkorb oder auf einem Bodenteil des Gehäuses. Durch das Verschließen der Luftöffnung zum Kraftstofftank wird sichergestellt, dass auch in einer vertikalen Position keinerlei Kraftstoff, d.h. Betriebsmittel aus dem Rasenmäher mit Verbrennungsmotor austritt. Bevorzugt ist der Verschlussdeckel zweiteilig ausgeführt, umfassend ein Deckelteil sowie ein Drehteil, wobei das Drehteil wenigstens in eine erste und eine zweite Position verbracht werden kann. Das Drehteil weist bevorzugt eine Dichtung auf, die derart ausgestaltet ist, dass die Dichtung am Deckelteil anliegt und die Luftöffnung dicht verschließt, wenn das Drehteil in die zweite Position, in der die Luftöffnung nicht freigegeben ist, verbracht wird.

Bevorzugt ist die Luftöffnung in dem Deckelteil als Durchbohrung ausgestaltet.

Um zu verhindern, dass Öl aus dem Verbrennungsmotor, bspw. bei einer vertikalen Lagerung austritt, ist vorgesehen, dass das Öl des Verbrennungsmotors beim Aufstellen in die unterschiedlichen Positionen im Verbrennungsmotor selbst verbleibt, bspw. in der Ölwanne und keine leitende Verbindung von der Ölwanne bzw. Teilen des Verbrennungsmotors in denen das Öl umläuft zu anderen Motorbauteilen, wie bspw. Luftfilter oder Auspuff besteht. Durch eine derartigen Ausgestaltung wird sichergestellt, dass Öl stets im Motorblock verbleibt und nicht in Motorbauteile wie den Luftfilter oder den Auspuff eintreten und von dort bei Aufstellen, z. B. in eine vertikale Position, an die Umgebung abgegeben werden kann.

In einer weiteren bevorzugten Ausführungsform der Erfindung ist vorgesehen, dass der Verbrennungsmotor einen Kraftstofftank aufweist, der in leitender Verbindung zu einem Vergaser steht, wobei in der leitenden Verbindung von Kraftstofftank zu Vergaser eine Kraftstoffauffangeinrichtung, insbesondere ein Kraftstoffauffanggefäß vorgesehen ist. Wird der Rasenmäher dann, bspw. bei nicht vollständig geleertem Tank, in eine vertikale Position aufgestellt, so ist sichergestellt, dass Kraftstoff nicht über den Vergaser bspw. in den Luftfilter und von dort in die Umgebung gelangt, sondern von dem Auffanggefäß aufgenommen wird. Das Auffanggefäß kann eine Verbindung zur Atmosphäre aufweisen, so dass Kraftstoff der sich im Auffangbehältnis befindet, verdunsten kann. Ein Austreten in flüssiger Form wird aber vermieden. Alternativ kann die Kraftstoffauffangeinrichtung eine leitende Verbindung zum Verbrennungsmotor und/oder zum Tank aufweisen, so dass austretendes Betriebsmittel wieder rückgeführt wird.

Alternativ oder zusätzlich zur Kraftstoffauffangeinrichtungen kann vorgesehen sein, dass die Kraftstoffleitung, die den Verbrennungsmotor mit dem Kraftstofftank verbindet mit einem Absperrelement, bspw. mit einem Benzinhahn ausgestattet ist, der bei Lagerung bspw. in einer vertikalen Position als Absperrelement für die Kraftstoffzufuhr fungiert. Auch durch diese Maßnahme wird verhindert, dass in einer vertikalen Nicht-Betriebsposition Betriebsmittel, hier Kraftstoff, aus dem Rasenmäher austritt. Die einzelnen vorbeschriebenen Maßnahmen zum Verhindern des Austrittes von Betriebsmitteln in unterschiedlichen Positionen, in denen der Rasenmäher aufbewahrt wird, insbesondere auch in einer vertikalen Position, sind einzeln verwirklichbar oder in Kombination.

Generell ist es ausreichend für eine stehende Lagerung bei entsprechend ausgestalteten Motoren einen Tankdeckel vorzusehen, der die Luftöffnung des Tankes die stets vorhanden sein muss, verschließt, wenn der Rasenmäher in die Nicht-Betriebsposition verbracht wird. Diese Maßnahme für sich alleine stellt bei entsprechender Konstruktion des Motors, d. h. entsprechender Ausgestaltung der Ölwanne sowie der Kraftstoffzufuhr sicher, dass kein Kraftstoff in einer vertikalen Nicht-Betriebsposition aus dem Rasenmäher austritt.

Die Drehzahl der Verbrennungskraftmaschine, gemäß dem zweiten Aspekt der Erfindung insbesondere des Benzinmotors liegt bevorzugt im Bereich zwischen 500 U/min und 7500 U/min, insbesondere im Bereich 2000U/min bis 7500U/min, bevorzugt im Bereich 2500 U/min bis 7000 U/min, insbesondere bevorzugt im Bereich 3800 U/min bis 6600 U/min.

Die Verbrennungsmotoren zeichnen sich dadurch aus, dass auch bei einer hohen Drehzahl von beispielsweise 6600 U/min noch einen niedrigen Geräuschpegel aufweisen, der insbesondere im gesetzlich zulässigen Geräuschepegel-Bereich liegt.

Um ein Inbetriebsetzen des Rasenmähers in der abgestellten Nicht-Betriebs-Position, insbesondere in der vertikalen Position zu verhindern ist eine Sicherheitseinrichtung vorgesehen. Die Sicherheitsvorrichtung kann eine Schalteinrichtung sein, die die Stromzufuhr zur Zündeinrichtung des Verbrennungsmotors unterbricht, wenn der Rasenmäher in einer Nicht-Betriebsposition, insbesondere in der vertikalen Position abgestellt wird.

In einer besonders bevorzugten Ausführungsform wird bei einem handgeführten Rasenmäher der am Gehäuse befestigte Führungsholm um eine horizontale Schwenkachse verschwenkt, so dass der Mäher beispielsweise auf der Gehäuserückwand in vertikaler Position abgestellt werden kann. Bei Mähern mit Führungsholm kann die Sicherheitseinrichtung ein Schalter sein, der die Stromzufuhr zur Zündeinrichtung unterbricht, wenn der Führungsholm aus der Arbeitsposition bzw. Betriebsposition in eine Nicht-Betriebsposition verschwenkt wird.

Gemäß einem weiteren Aspekt der Erfindung weist ein Rasenmäher mit einem Verbrennungsmotor, eine Abtriebswelle auf und eine Schneideinrichtung, die von einer Antriebswelle angetrieben wird, wobei die Abtriebswelle des Motors mit der Antriebswelle der Schneideinrichtung über eine kraftübertragende Verbindung verbunden ist und die kraftübertragende Verbindung eine Fliehkraftkupplung umfasst.

Durch ein Entkoppeln der Abtriebswelle des Motors von der Antriebswelle der Schneideinrichung gemäß dem zweiten Aspekt der Erfindung wird erreicht, dass der Verbrennungsmotor sehr leicht, d.h. ohne großen Kraftaufwand im Leerlauf gestartet werden kann. Die Antriebswelle der Schneideinrichtung kann nach Starten des Motors über die erfindungsgemäße Fliehkraftkupplung an die Abtriebswelle des Motors gekoppelt werden. Werden beispielsweise Servicearbeiten am Rasenmäher, wie das Wechseln des Fangbehälters durchgeführt, ist es bei der erfindungsgemäßen Ausführungsform nicht mehr notwendig, den Verbrennungsmotor außer Betrieb zu setzen und erneut zu starten, sondern der Verbrennungsmotor wird von der Abtriebswelle des Motors über die Fliehkraftkupplung entkoppelt. Während die Schneideinrichtung in 3 Sekunden stillgesetzt wird, dreht der Verbrennungsmotor im Leerlauf weiter. Nachdem der Fangbehälter getauscht ist kann die Abtriebswelle wieder an die Antriebswelle der Schneideinrichtung gekoppelt und der Mähvorgang fortgesetzt werden. Durch die Verbindung der Antriebswelle der Schneideinrichtung mit der Abtriebswelle des Verbrennungsmotors über eine Fliehkraftkupplung wird ein großer Nutzervorteil erzielt und die Bedienbarkeit verbessert

In einer bevorzugten Ausführungsform der Erfindung verläuft die Abtriebswelle des Motors entlang einer ersten vertikalen Achse und die Antriebswelle entlang einer zweiten vertikalen Achse. Bevorzugt liegen erste und zweite Achse parallel zueinander und weisen einen Abstand zueinander auf.

In einer weitergebildeten Ausführungsform der Erfindung ist die kraftübertragende Verbindung ein Riementrieb mit zwei Riemenscheiben.

Der Riementrieb hat den Vorteil, dass über die Riemenscheiben der Riementrieb eine an die Verbrennungskraftmaschine angepasste Untersetzung aufweist. Auf diese Art wird erreicht, dass an der Schneideinrichtung ein vorbestimmtes Drehmoment erreicht wird. Insbesondere kann gegenüber Rasenmähern gemäß dem Stand der Technik durch eine entsprechende Untersetzung das Drehmoment an der Schneideinrichtung, insbesondere am Messer erhöht werden.

Bevorzugt liegt die Untersetzung im Bereich von 1:1,2 bis 1:6, vorzugsweise Im Bereich von 1:1, 5 bis 1:3, insbesondere im Bereich von 1:1,8 bis 1:2,2 liegt.

Die Drehzahl des Verbrennungsmotors für eine Ausführungsform mit Fliehkraftkupplung liegt bevorzugt im Bereich 5000 U/min bis 7500 U/min, besonders bevorzugt im Bereich 5500 U/min bis 7000 U/min, insbesondere im bereich 5800 U/min bis 6600 U/min. Beträgt beispielsweise die Drehzahl 6000 U/min und weist der Riementrieb weist eine 1:2-Untersetzung auf, so beträgt dann die Drehzahl der Schneideinrichtung ungefähr 3000 U/min. Es ist somit durch die Wahl der Untersetzung möglich eine ganz bestimmte Umdrehungszahl und damit Drehmoment am Messer einzustellen. Die freie Einstellbarkeit durch die Wahl der Untersetzung ist deswegen vorteilhaft, weil die Drehzahl am Messer und damit das Drehmoment bei vorgegebener Motordrehzahl für unterschiedliche Rasenmäher optimal eingestellt werden kann. So kann die Drehzahl am Messer auf die Schnittform, die Gehäuseform, die Messerform sowie den Schnittkreisdurchmesser angepasst werden.

In einer weiteren bevorzugten Ausführungsform ist der Mäher so ausgestaltet, dass die vom Messer von unten her angesaugte Luft in ausreichender Menge und unter ausreichendem Druck in einen Ringkanal gelangt, so dass die Mahd vollständig und problemlos nach außen abgeführt werden kann.

Um die Lärmentwicklung, insbesondere im Dauerbetrieb, des Rasenmähers zu minimieren, kann eine Schalteinrichtung vorgesehen sein, mit der die Motordrehzahl in Abhängigkeit von der Mähleistung, die am Messer zur Verfügung gestellt werden soll, eingestellt werden kann. Beispielsweise kann der Motor, falls der Mäher eine 1:2-Untersetzung aufweist, beispielsweise in der hohen Leistungsstufe mit einer Drehzahl von ungefähr 6000 U/min laufen, so dass am Messer eine Drehzahl von ungefähr 3000 U/min vorliegt und in der Dauerleistungsstufe mit ungefähr 5200 U/min, so dass eine Drehzahl am Messer von ungefähr 2600 U/min vorliegt. Die hohe Leistungsstufe wird nur benötigt, wenn hohes Gras gemäht werden soll.

Selbstverständlich könnte anstelle der Einstellung der Motordrehzahl auch die Untersetzung geändert werden, beispielsweise mit Hilfe eines Getriebes.

Derartige Einstellungen wie oben beschrieben sind gemäß der Erfindung möglich, da Abtrieb und Antrieb gemäß dem zweiten Aspekt der Erfindung voneinander getrennt sind.

Zur Unterstützung der Mähleistung kann in einer weitergebildeten Ausführungsform ein weiterer, zweiter Ringkanal vorgesehen sein, der den genannten - nunmehr ersten ― Ringkanal umgibt. Der zweite Ringkanal wird dabei aus der Umfangswand des ersten Ringkanals und einer radial außen liegenden Hüllwand, beispielsweise der Gehäusevorderwand, gebildet. Der zweite Ringkanal wird dabei den ersten Ringkanal nur auf einem Teil von dessen Umfang umschließen, und zwar bevorzugt - in Fahrtrichtung des Rasenmähers gesehen - auf einem vorderen Umfangsbereich. Ein Umschlingungswinkel von wenigen Grad, beispielsweise 5 bis 10 Grad, kann ausreichen. Besser sind 20 bis 30 Grad.

Auch 180 Grad sind denkbar. Der zweite Ringkanal ist mit einem Lufteinlass versehen, durch welchen Luft von außen eintreten kann. Es ist aber auch denkbar, den zweiten Ringkanal mit Luft zu versorgen, die von einem Lüfterrad angesaugt wird, das sich auf der Motorwelle befindet und somit vom Motor angetrieben wird. Die Unterkante der Hüllwand wird im Allgemeinen sehr weit herabreichen, bis in das Gras hinein. Bevorzugt ist die Unterkante der Umfangswand - die sich zwischen den beiden Ringkanälen befindet derart ausgestaltet, dass die Luft vom zweiten Ringkanal in den ersten Ringkanal unterhalb der Schneideinrichtung, insbesondere des Messers dem ersten Ringkanal zugeführt wird.

Durch eine derartige Luftführung wird erreicht, dass auch bei niedrigen Mähpositionen ausreichende Luftströmung für eine ausreichende Mähleistung zur Verfügung steht. Der erfindungsgemäße Rasenmäher verfügt auch bei niedrigen Mähpositionen über eine ausreichende Luftzufuhr, um die Mahd aus dem Mähkanal zu fördern.

In einer bevorzugten Ausgestaltung der Erfindung wird eine derartige Luftführung dadurch erreicht, dass die Umfangswand im Wesentlichen auf der gleichen Höhe endet wie die Unterkante des Schneidemessers. Hierdurch wird die Luft optimal unterhalb des Scheidemessers vom ersten in den zweiten Ringkanal transportiert. Da die Umfangswand nicht mehr die Schutzfunktion übernimmt, die den Benutzer gegen einen zufälligen Eingriff in das Messer schützen soll, muss die Umfangswand nicht mehr bis unter das Messer reichen. Es reicht somit aus, wenn sich die Umfangswand bis zur Höhe des Messers erstreckt. Die Schutzfunktion übernimmt bei dem erfindungsgemäßen Mäher die Hüllwand.

Dies bedeutet weiterhin, dass der Spalt zwischen der Unterkante der Umfangswand und dem Erdboden groß bemessen werden kann - ungeachtet der Höhe, auf welcher sich das Messer befindet. Ist der Spalt groß, so kann reichlich Luft aus dem zweiten - äußeren - Ringkanal in den ersten - inneren - Ringkanal strömen. Damit ist eine optimale Luftversorgung des Rasenmähers gewährleistet.

Der zweite Ringkanal bringt aber noch einen weiteren Vorteil: Das durch die strömende Luft erzeugte Geräusch wird minimiert. Dies ist darauf zurückzuführen, dass der Spalt zwischen dem Erdboden und der Unterkante der Umfangswand größer bemessen werden kann, so dass die Geschwindigkeit der die Unterkante umströmenden Luft geringer sein kann.

Die zuvor beschriebenen Maßnahmen können je für sich einzeln mit einander kombiniert werden, ohne dass vom Offenbarungsgehalt der Anmeldung abgewichen wird.

Die Erfindung ist anhand der Zeichnung näher erläutert. Darin ist im Einzelnen Folgendes dargestellt:
- Fig. 1a-b: zeigt das Aufstellen des Rasenmähers in eine vertikale Aufbewahrungsposition

- Fig. 2: ein in vertikaler Position aufgestellter Rasenmäher mit Verbrennungsmotor gemäß einer ersten Ausführungsform
- Fig. 3-4: eine Detailansicht eines Mähers gemäß Fig. 2
- Fig. 5a - d: eine Detailansicht des Verschlussdeckels
- Fig. 6: zeigt einen erfindungsgemäßen Rasenmäher gemäß einer zweiten Ausführungsform in einer Schnittansicht
- Fig. 7: zeigt den Rasenmäher gemäß Figur 6 von vorne

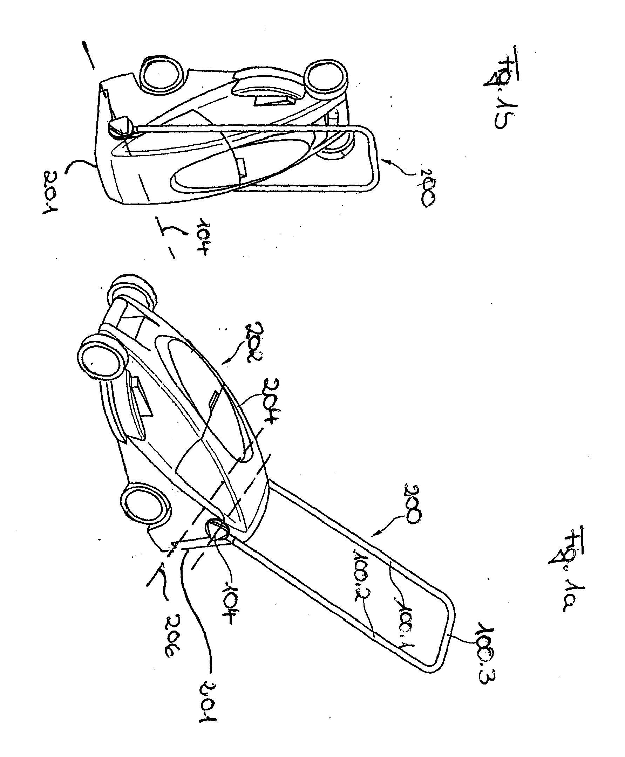

In den Figuren 1 a und 1 b ist das grundlegende Prinzip der vorliegenden Anmeldung eines Rasenmähers mit Verbrennungsmotor gezeigt, nämlich die Aufstellung in einer beliebigen Aufbewahrungsposition, insbesondere in einer vertikalen Position. So ist in Figur 1 a ist ein erfindungsgemäßer Rasenmäher in einer Betriebsposition gezeigt. Der Führungsholm 200 mit Schenkeln 100.1, 100.2 und einem Steg 100.3 ist in die Arbeits- oder Betriebsposition verbracht. Wird der Rasenmäher beispielsweise vertikal auf die Gehäuserückwand 201 wie in Figur 1 b gezeigt aufgestellt, so wird der Führungsholm 200 um die Schwenkachse 104 verschwenkt. Durch das Verschwenken des Führungsholmes um die Achse 104 wird ein nicht dargestellter Schalter aktiviert und die Stromzufuhr zur Zündeinrichtung des Verbrennungsmotors unterbrochen. Hierdurch wird sichergestellt, dass der Mäher nicht in der Aufbewahrungsposition in Betrieb gesetzt werden kann.

Bei der in den Figuren 1 a und 1 b dargestellter Ausführungsform eines erfindungsgemäßen Mähers umschließt das Gehäuse 202 den Grasfangkorb, der vorliegend nicht dargestellt ist. Dies ist eine bevorzugte, aber keine zwingende Ausführungsform. Um den Grasfankorb zu entleeren wird die hintere Gehäusehälfte 204 um eine Gehäuseschwenkachse 206 verschwenkt. Der in der hinteren Gehäusehälfte untergebrachte Grasfangkorb kann dann leicht entnommen werden. Durch die Integration des Grasfangkorbes in das Gehäuse, wird erreicht, dass der Rasenmäher als System, d.h. Mäheinrichtung mit Grasfangkorb in einer vertikalen Position wie in Figur 1 b gezeigt aufbewahrt werden kann. Alternativ könnte der Grasfangkorb auch nicht in das Gehäuse integriert sein. Der Rasenmäher würde dann bspw. in der vertikalen Position auf dem Grasfangkorb abgestellt.

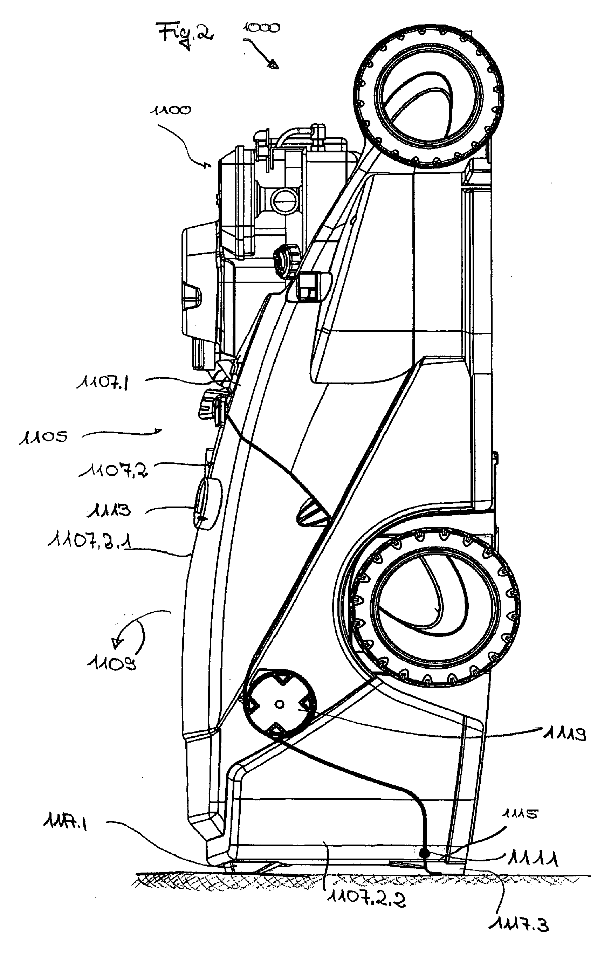

In Figur 2 ist eine Übersichtsansicht einer ersten Ausgestaltung eines erfindungsgemäßen Mähers 1000 gezeigt, der als Antriebseinheit einen Verbrennungsmotor 1100 umfasst. Der Verbrennungsmotor 1100 treibt über eine nicht dargestellte Welle ein nicht dargestelltes Schneidmesser mit einem Messerblatt an, mit welchem das Gras abgeschnitten bzw. abgeschlagen werden kann.

Der Mäher umfasst in der dargestellten Ausgestaltung ein Gehäuse 1105, das einen nicht dargestellten Grasfangkorb umschließt. Der Grasfangkorb ist in das Gehäuse eingelassen. Das Gehäuse umfasst ein Gehäusehauptteil 1107.1 sowie ein Gehäusedeckel 1107.2, wobei der Gehäusedeckel ein Deckeloberwandteil 1107.2.1, sowie ein Deckelrückwandteil 1107.2.2 umfasst. Die äußeren Begrenzungsflächen der beiden Deckelteile, Deckeoberwandteil 1107.2.1 und 1107.2.2 verlaufen in der dargestellten Ausführungsform wenigstens annähernd in einem rechten Winkel zueinander und bilden auch jeweils einen Teil der Gehäuseseitenwände. Des Weiteren zu erkennen ist die Schwenkachse 1111, um die die Gehäuseklappe 1107 bspw. in die eingezeichnete Pfeilrichtung 1109 verschwenkt werden kann. Die Schwenkachse 1111 verläuft im Wesentlichen horizontal und befindet sich am unteren Ende des Deckelrückwandteils 1107.2.2. In geöffnetem Zustand lässt sich der im Gehäuse eingelassene Grasfangbehälter sehr leicht aus dem Gehäuse nach oben heraus nehmen. Des Weiteren ist eine Füllstandsanzeige 1113 am Gehäuseoberwandteil 1107.2.1 vorgesehen. Die Füllstandsanzeige 1113 ist als Luftauslassöffnung in das Oberwandteil eingelassen und umfasst eine Füllstandsklappe. Ist der Grasfangkorb nicht vollständig gefüllt, so wird durch den Grasfangkorb die Füllstandsklappe gegen einen Anschlag gedrückt. Ist hingegen der Grasfangkorb vollständig gefüllt, so weicht der Druck des Luftstroms nicht mehr aus, die Füllstandsklappe gegen den Anschlag zu drücken. Die aufgrund der Gewichtskraft herabgefallene Füllstandklappe ist dann eine Anzeige dafür, dass der Grasfangkorb gefüllt ist. Mit Hilfe der Füllstandsklappe ist es möglich, dass die Bedienperson den Grasfangkorb bei vollständiger Füllung wechseln kann ohne, dass hierfür der Grasfangkorb geöffnet werden muss. In der dargestellten Ausführungsform wird der Rasenmäher 1000 zur Lagerung in eine vertikale Position wie dargestellt verbracht und auf wenigstens zwei bzw. drei an der Deckelrückwand 1107.2.2 und der Gehäuserückwand 1115 angeformten Auflagerpunkten 1117.1, 1117.3 aufgestellt. Das Rasenbearbeitungsgerät bzw. der Rasenmäher wird somit in eine horizontale Position auf eine Vielzahl von Auflagerpunkten auf die Fläche der hinteren Stirnwand aufgestellt. Wie man aus Figur 2 erkennt, benötigt der stehend verstaute Rasenmäher nur wenig Grundfläche, was bei beengten Raumverhältnisse, z. B. in einer Garage, sehr vorteilhaft ist. Um das Aufstellen zu ermöglichen wird der nicht dargestellte Führungsholm der mittels der Schrauben 1119 arretiert wird aus einer Arbeitsposition in eine Aufbewahrungsposition verschwenkt.

Selbstverständlich wäre es möglich in anderen Ausgestaltungen der Erfindung den Rasenmäher auch auf einer Fläche, z. B. der Gehäuserückwandfläche aufzustellen und nicht nur auf den Auflagerpunkten oder aber auf einem Grasfangkorb, falls dieser nicht in das Gehäuse integriert ist oder aber auch auf den Vorderrädern.

Erfindungsgemäß ist es für eine im Wesentlichen vertikale Lagerung notwendig, dass bei einem Rasenmäher mit Verbrennungsmotor 1100 der Verbrennungsmotor derart ausgestaltet ist, dass ein Austritt von Betriebsmittel, bspw. Öl oder Kraftstoff in der Nicht-Betriebsposition, insbesondere in der vertikalen Position verhindert wird.

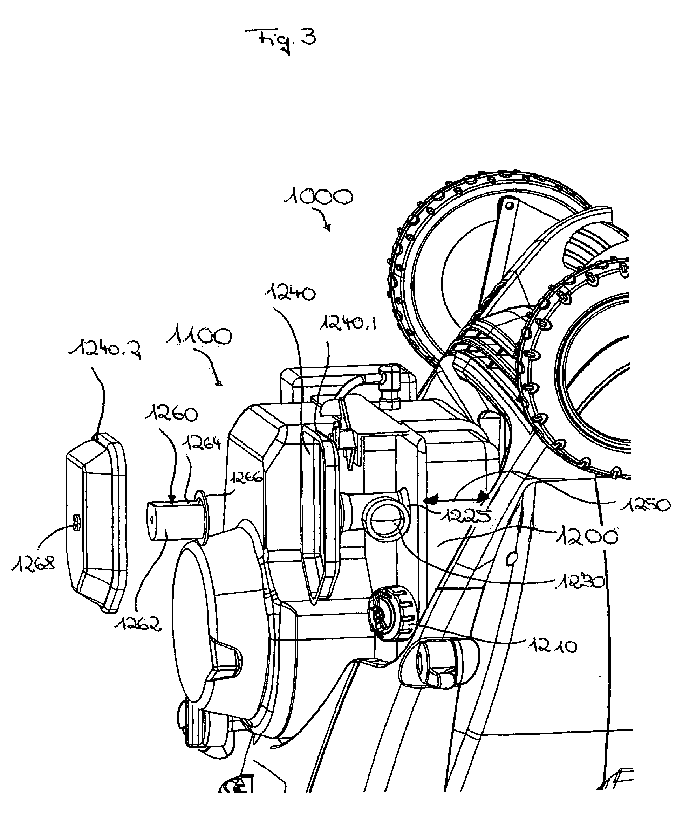

Dies wird durch die nachfolgend beschriebenen Maßnahmen, die in den Figuren 3 bis 5d gezeigt sind.

In Figur 3 sind gleiche Bauteile wie in Figur 2 mit denselben Bezugsziffern belegt. Detailliert gezeigt ist der vordere Teil des Rasenmähers 1000 mit den Details des Verbrennungsmotors 1100. Der Verbrennungsmotor hat einen Tank 1200 zur Aufbewahrung des Kraftstoffes. Der Tank 1200 hat einen Kraftstoffeinlass der mit einer Verschlusskappe 1210 verschlossen ist. Die Verschlusskappe 1210 ist derart ausgestaltet, dass sie im Betriebszustand eine Luftöffnung freigibt, um Luft in den Tank einzulassen, so dass Kraftstoff aus dem Tank heraus in den Motor gefördert werden kann. Diese Luftöffnung ist für einen Verbrennungsmotor notwendig. In der horizontalen Position, in der bislang herkömmliche Rasenmäher mit Verbrennungsmotoren gelagert werden, ist eine solche Ausgestaltung des Tankdeckels unproblematisch. Wird jedoch wie in Figur 3 dargestellt der Rasenmäher mit Verbrennungsmotor in einer beliebigen Position, insbesondere in einer aufrechten Position, d.h. vertikalen Position gelagert, so tritt bei herkömmlichen Verschlussdeckeln bzw. Verschlusskappen 1210 durch die zuvor beschriebene und notwendige Lufteinlassöffnung in den Tank, Betriebsmittel aus dem Kraftstoffbehälter 1200 aus. Daher ist erfindungsgemäß der Verschlussdeckel so ausgeführt, dass der Verschlussdeckel zwei Positionen aufweist, eine Betriebsposition mit freigegebener Luftöffnung und eine Aufbewahrungsposition, bei der diese Luftöffnung dicht verschlossen wird.

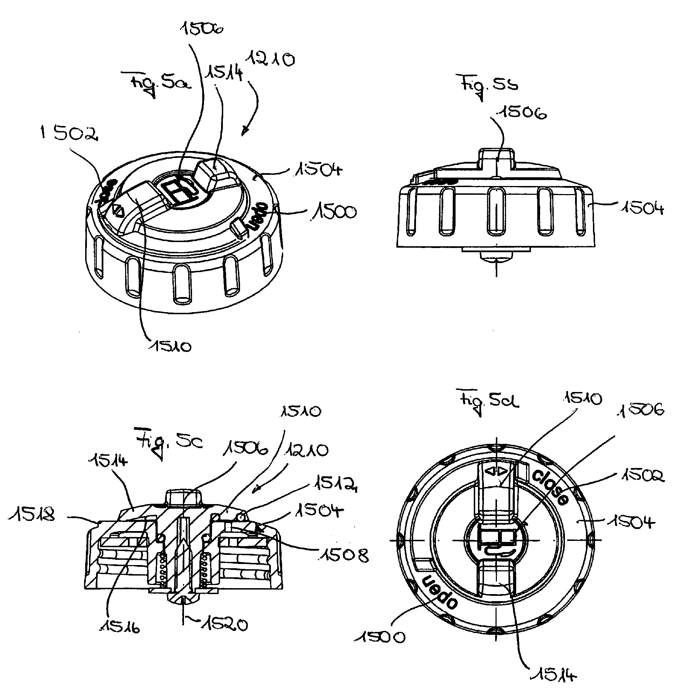

Eine mögliche Ausführungsform eines derartigen Tankdeckels bzw. Verschlussdeckels ist detailliert in den Figuren 5a bis 5d gezeigt.

Vom Kraftstoffbehälter 1200 besteht eine leitende Verbindung 1225 zum Vergaser 1230, der wiederum in leitender Verbindung mit einem Luftfilter 1240 steht. Der Luftfilter 1240 ist in der dargestellten Figur 3 in einer aufgeschnittenen Version gezeigt. Der Luftfilter besteht aus einem Unterteil 1240.1 und einem Oberteil 1240.2. Um zu verhindern, dass der Kraftstoff bei Aufstellen in eine Aufbewahrungsposition, bspw. bei einem Flüssigkeitsendstand oberhalb des Pegels 1250 über den Vergaser 1230 in den Luftfilter eindringt, ist in einer ersten Ausgestaltung der Erfindung wie in Figur 3 dargestellt vorgesehen, in den Luftfilter am Ende der leitenden Verbindung vom Vergaser zum Luftfilter eine Auffangvorrichtung, hier ein Auffangbehälter 1260, vorzusehen. Der Auffangbehälter 1260 nimmt Kraftstoff, der über den Vergaser 1230 in den Luftfilter gelangt, auf. Der Behälter 1260 weist einen Auffangraum 1262 auf, der wiederum eine Öffnung 1264 hat, die in leitender Verbindung mit der Umgebung steht. Auf diese Art und Weise ist es möglich, dass der im Gefäß 1260 aufgefangene Kraftstoff im Aufbewahrungszustand verdampft und gasförmig in die Atmosphäre entweicht. Eine wesentlich umweltverträglichere Lösung ist es aber, das Auffangbehältnis mit einer Rückleitung in den Motor zu verbinden, so dass im Auffangbehältnis 1260 aufgefangener Kraftstoff über diese Rückleitung wiederum in den Tank bzw. Motor zurückfließen kann. Um das Auffangbehältnis 1260 dicht mit dem Vergaserauslass zu verbinden, ist an der Unterseite des Auffanggefäßes 1260 ein Dichtring 1266 vorgesehen. Die Arretierung des Auffanggefäßes geschieht mit Hilfe einer Befestigung 1268, bspw. einer Schraube am Deckel 1240.2 des Luftfilters.

Alternativ zu dem Auffanggefäß 1260 könnte auch ein Absperrhahn in einer Benzinleitung, die vom Tank 1200 zum Vergaser eines Verbrennungsmotors führt vorgesehen sein. Diese Ausführungsform ist vorliegend nicht dargestellt. Der Benzinhahn kann dann in zwei Stellungen verbracht werden, eine Betriebsstellung, in der der Benzinshahn geöffnet ist und in eine Aufbewahrungsstellung, in der der Benzinhahn geschlossen ist. Auch dann ist ein Aufstellen des Rasenmähers in eine beliebige Position, insbesondere eine vertikale Position möglich. Allerdings muss auch bei einer derartigen Ausführungsform dafür Sorge getragen werden, dass ein Austreten von Kraftstoff über die Luftöffnung des Kraftstofftankes nach außen, die bspw. im Tankdeckel vorgesehen sein kann, verhindert wird, indem man hier ein entsprechend ausgestaltetes Verschlusselement vorsieht, wie beispielsweise in Figur 5a-5d dargestellt.

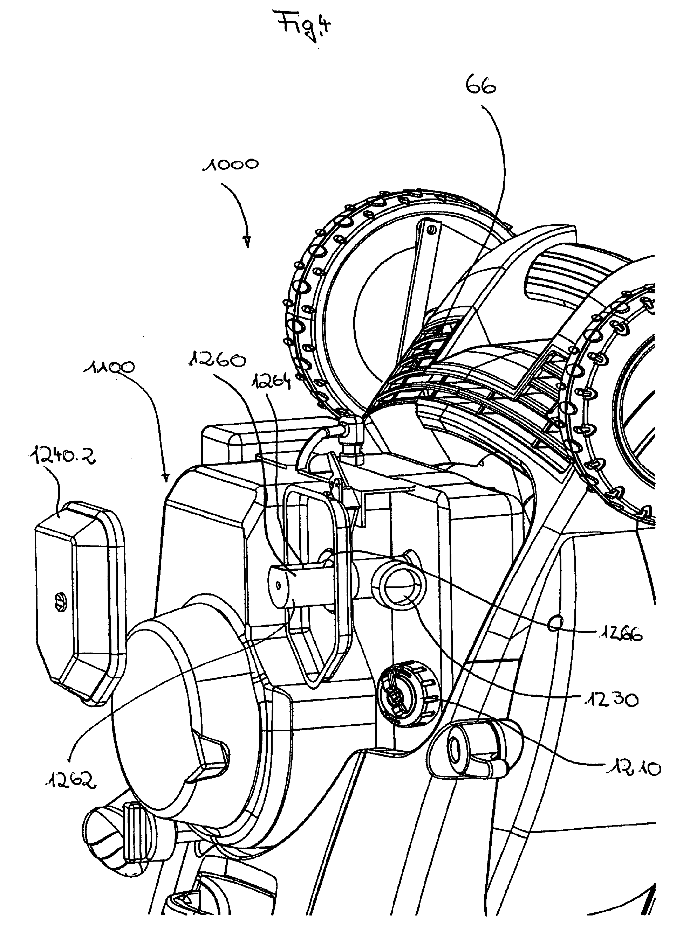

In Figur 4 ist im Wesentlichen die gleiche Ansicht wie in Figur 3 gezeigt. Es ist in der Figur gleiche Bauteile mit denselben Bezugsziffern wie in Figur 3 belegt. Allerdings ist in Figur 4 im Gegensatz zur Figur 3 der Auffangbehälter 1260 im eingebauten Zustand bei geöffnetem Luftfilter 1240 gezeigt. Wie aus Figur 4 deutlich hervorgeht, ist der Behälter 1260 dicht über das Anliegen der Unterseite mit einer Dichteinrichtung 1266 an der Zufuhröffnung des Vergasers zum Luftfilter verbunden.

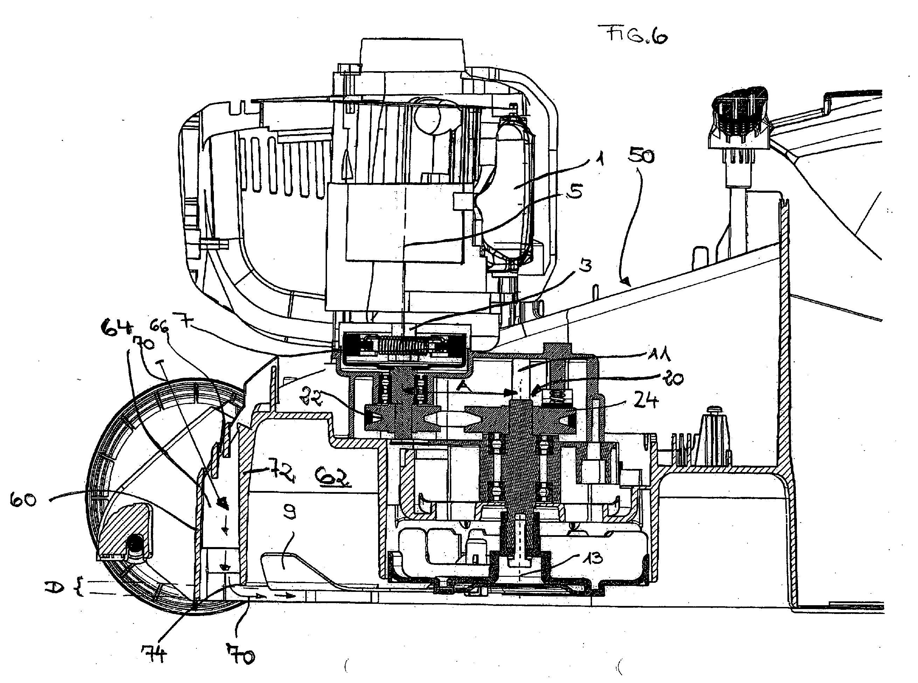

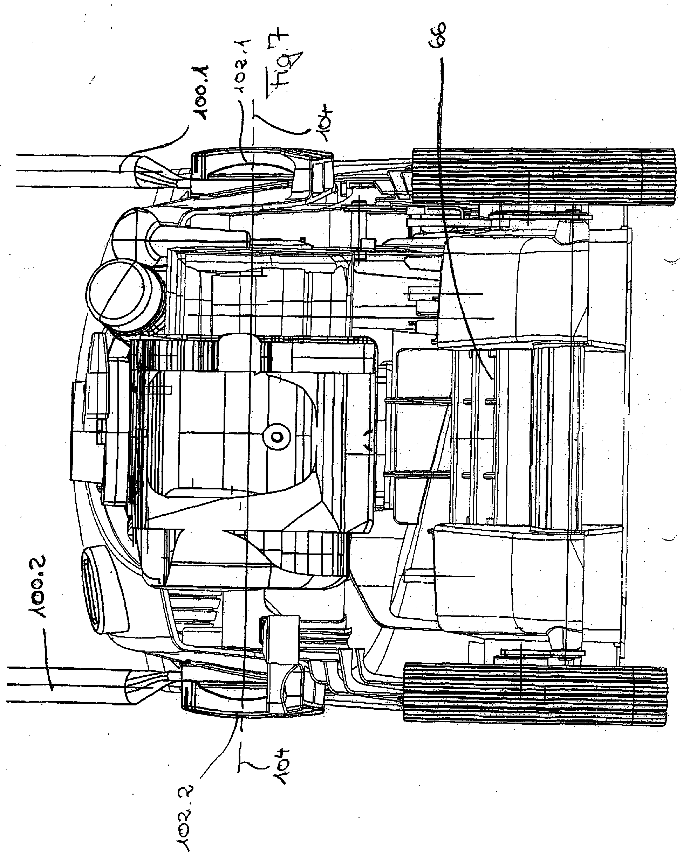

Des Weiteren ist wie in Figur 4 zu erkennen, eine Luftzufuhröffnung 66 gezeigt, mit der Luft angesaugt und unterhalb die Schneideinrichtung befördert werden kann. Dies ist detailliert in Figuren 6 und 7 gezeigt.

Die Figuren 6 und 7 zeigen eine alternative Ausgestaltung eines in einer horizontalen Lage aufstellbaren Rasenmähers mit Verbrennungsmotor, wobei zwischen Antriebswelle des Motors und Abtriebswelle des Schneidemessers eine Fliehkraftkupplung eingebaut ist. Die Ausgestaltung des Schneidraumes kann aber ohne erfinderisches Zutun von der Darstellung in Figur 6 und 7 auf das Ausführungsbeispiel gemäß Figur 2 übertragen werden, nämlich dann, wenn die Fliehkraftkupplung im Kraftweg vom Motor zum Schneidmesser weggedacht wird und ein direkter Antrieb des Messers über die Motorwelle wie bei der Ausführungsform gemäß Figur 2 erfolgt.

Insoweit sind sämtliche bei den Figuren 6 und 7 beschriebenen Ausgestaltungen des Schneidraums mit Schneidmesser auf die Ausführungsformen gemäß den Figuren 2 bis 4 übertragbar. Die Lufteinlassöffnung ist, z.B. in Figur 4 wie bei den Figuren 6 und 7 mit der Bezugsziffer 66 gekennzeichnet.

Ein weiteres Merkmal der Verbrennungsmotoren, der in den Figuren 2 bis 4 sowie in den Figuren 6 und 7 dargestellten Rasenmäher ist, dass der Ölkreislauf der Verbrennungsmotoren so geführt wird, dass auch bei stehender Lagerung kein Öl aus dem Ölkreislauf des Verbrennungsmotors austritt. Dies wird bspw. dadurch sichergestellt, dass der Ölkreislauf des Motors keine leitende Verbindung zu Motoranbauteilen besitzt, so dass auch bei stehender Lagerung wie in den Figuren 2 bis 7 gezeigt ein Austritt des Öls in angrenzende Motorbauteile verhindert wird.

In den Figuren 5a bis 5d ist eine mögliche Ausgestaltung der Verschlusskappe bzw. eines Verschlussdeckels 1210 gezeigt. Figur 5a zeigt die Verschlusskappe in einer Draufsicht. Der Verschlussdeckel ist zweiteilig ausgeführt und umfasst ein Deckelteil 1504 und ein Drehteil 1506.Deutlich zu erkennen, die beiden Stellungen 1500 (offen) sowie 1502 (geschlossen). Über den in das Deckelteil 1504 eingelassenen Drehknopf 1506 kann ein Dichtring in die geschlossene Position 1502 gebracht werden und so die in das Deckelteil 1504 des Verschlussdeckels 1210 eingebrachte Luftöffnung verschlossen werden. Dies ist detailliert in Figur 5c gezeigt. In Figur 5b ist deutlich das Deckelteil 1504 als erstes Bauteil des Verschlussdeckels 1210 und das Drehteil 1506 als zweites Bauteil des Verschlussdeckels 1210 zu erkennen. In Figur 5c ist der Verschlussdeckel 1210 im Schnitt gezeigt. Deutlich zu erkennen ist das Deckelteil 1504 sowie das Drehteil 1506. Des Weiteren zu erkennen, die im Deckelteil eingelassene Luftöffnung 1508. Die Luftöffnung 1508 wird im geschlossenen Zustand 1502 gemäß Figur 5a von einer ersten Übergreifung des Deckelteils 1506 in die ein Dichtring 1512 eingelassen ist, dicht verschlossen. Wird das Drehteil 1506 in die Position 1500 verbracht, so liegt die erste Übergreifung auf der Oberfläche des Deckelteils 1504 an und die zweite Übergreifung 1514 ohne Dichtring 1512 liegt über der Luftöffnung 1508. Zwischen der Oberseite 1518 des Deckelteils 1504 und dem Drehteil 1506 wird dann eine Öffnung wie z.B. die Öffnung 1516 ausgebildet, so dass eine leitende Verbindung mit der Atmosphäre besteht. Das Drehteil 1506 ist um die Drehachse 1520 drehbar.

In Figur 5d ist in einer Draufsicht nochmals der Verschlussdeckel 1506 gezeigt. Deutlich zu erkennen, die beiden Stellungen 1502 und 1500 in die das Drehteil 1506 verbracht werden kann. Des Weiteren zu erkennen, die Übergreifungen 1510 mit Dichtring und die Übergreifung1514 .Ein Verschlussdeckel wie in den Figuren 5a bis 5d gezeigt, kann zum dichten Verschließen des Tankes eines Verbrennungsmotors nicht nur bei einer Ausführungsform eines Rasenmähers gemäß den Figuren 2 bis 4 eingesetzt werden, sondern selbstverständlich auch bei einem Rasenmäher mit einer Fliehkraftkupplung wie in den Figuren 6 und 7 um auch bei einem derartigen Rasenmäher, der in einer horizontalen Position gelagert wird, den Austritt von Kraftstoff aus dem Tankbehälter zu verhindern.

In Figur 6 ist eine alternative Ausführungsform eines Rasenmäher mit einem Verbrennungsmotor im Schnitt gezeigt. Bei dem in den Figuren 6 und 7 gezeigten Rasenmäher ist der Verbrennungsmotor ein Viertakt-Benzinmotor 1. Der Viertakt-Benzinmotor zeichnet sich erfindungsgemäß dadurch aus, dass er so ausgestaltet ist, dass eine Lagerung in jeder Position möglich ist, ohne dass Betriebsmittel, wie Öl oder Kraftstoff aus dem Motor austritt. Dies ist auch dann der Fall, wenn der Rasenmäher aufrecht, d.h. in einer vertikalen Position aufgestellt wird. Ein Aufstellen in vertikaler Position lässt eine besonders platzsparende Lagerung zu, wenn der Rasenmäher aufbewahrt wird. Das Aufstellen in eine aufrechte Position kann entweder auf der Rückfläche des nicht dargestellten Graßfangbehälters oder einer Gehäuserückwand wie in Figuren 1 a bis 1 b oder beispielsweise auf den Vorderrädern erfolgen, solange nur mindestens drei Lagerpunkte vorgesehen sind. Der Motor 1 weist eine Abtriebswelle 3 auf, die entlang einer ersten vertikalen Achse 5 angeordnet ist. Die Abtriebswelle 3 umfasst in der Ausgestaltung gemäß Figur 6 und 7 eine Fliehkraftkupplung 7. Die Fliehkraftkupplung stellt nur im Betriebszustand eine kraftübertragende Verbindung zwischen dem Motor 1 und dem Messer 9 der Schneideinrichtung zur Verfügung. Auf diese Art und Weise kann der Motor des Rasenmähers sehr leicht angelassen werden. Erst wenn der Verbrennungsmotor die erforderliche Drehzahl erreicht hat, wird über die Fliehkraftkupplung die Schneideinrichtung zugeschaltet.

Bei der dargestellten Ausführungsform ist die Antriebswelle 11 entlang einer zweiten vertikalen Achse 13 angeordnet. Erste und zweite vertikale Achse weisen einen horizontalen Abstand A voneinander auf.

Die zueinander beabstandete Abtriebswelle 3 des Motors 1 und die Antriebswelle 11 der Schneideinrichtung sind über einen Riementrieb 20 miteinander verbunden. Der Riementrieb 20 umfasste eine erste Riemenscheibe 22 auf der Abtriebswelle 5 des Motors 1 und eine zweite Riemenscheibe 24 auf der Antriebswelle des Messers 9. Die Größe der Riemenscheiben kann so gewählt werden, dass ein vorbestimmtes Über- bzw. Untersetzungsverhältnis eingestellt wird. Falls der Benzinmotor eine hohe Drehzahl, beispielsweise von 6000 U/min aufweist kann durch eine 1:2 Untersetzung eine Drehzahl von 3000 U/min für das Messer 9 eingestellt werden. Durch die Untersetzung ist es möglich das Drehmoment am Messer und damit die Mähleistung zu steigern. Bei dem erfindungsgemäßen Rasenmäher ist es durch die Wahl der Untersetzung möglich eine ganz bestimmte Umdrehungszahl und damit Drehmoment am Messer einzustellen. Durch die freie Einstellbarkeit kann die Drehzahl am Messer und damit das Drehmoment für unterschiedliche Rasenmäher optimal eingestellt werden kann. So kann die Drehzahl am Messer an die Schnittform, die Gehäuseform, die Messerform sowie den Schnittkreisdurchmesser angepasst werden.

Um die Lärmentwicklung des Rasenmähers zu minimieren, kann eine Schalteinrichtung vorgesehen sein, mit der die Motordrehzahl in Abhängigkeit von der Mähleistung, die am Messer zur Verfügung gestellt werden soll, eingestellt werden kann. Beispielsweise kann der Motor, falls der Mäher eine 1:2-Untersetzung aufweist in der hohen Leistungsstufe mit einer Drehzahl von ungefähr 6000 U/min laufen, so dass am Messer eine Drehzahl von ungefähr 3000 U/min vorliegt und in der Dauerleistungsstufe mit ungefähr 5200 U/min, so dass eine Drehzahl am Messer von ungefähr 2600 U/min vorliegt.

In einer weiteren bevorzugten Ausführungsform ist der Mäher so ausgestaltet, dass die vom Messer von unten her angesaugte Luft in ausreichender Menge und unter ausreichendem Druck in einen Ringkanal gelangt, so dass die Mahd vollständig und problemlos nach außen abgeführt werden kann.

Der Rasenmäher weist des Weiteren vier Räder auf. Diese können vom Motor angetrieben sein. Dies ist jedoch nicht notwendigerweise der Fall.

Der Rasenmäher kann einen abnehmbar angesetzten und verriegelten, in Figur 6 nicht dargestellten, Graßfangbehälter umfassen. Das in Figur 6 dargestellte Gehäuse 50 des Rasenmähers hat einen Auslass, und der Grasfangbehälter hat einen Einlass - beide hier nicht erkennbar. Auslass und Einlass sind deckungsgleich, so dass das Innere des Gehäuses 50 und das Innere des Grasfangbehälters miteinander in leitender Verbindung stehen. Der Grasfangbehälter ist außerdem perforiert. Als Perforation können Schlitze oder Bohrungen oder sonstige Löcher dienen.

In einer besonderen Ausführungsform der Erfindung kann der Grasfangbehälter von einem Teil des Gehäuses umschlossen werden. Er wird dann zum Wechseln aus dem Gehäuse z.B. nach oben herausgenommen und nach dem Entleeren wieder eingesetzt. Ein derartiger Rasenmäher, bei dem das Gehäuse auch den Graßfangbehälter umschließt ist in Fig 1a-1b und Fig. 2 bis Fig. 4 gezeigt.

Falls es sich bei dem Rasenmäher um einen handgeführten Rasenmäher handelt, so umfasst der Rasenmäher einen in Figur 6 nicht dargestellten Führungsholm. Der Führungsholm kann zwei Schenkel sowie einen diese beiden Schenkel miteinander verbindenden Steg umfassen. Der Führungsholm der in Figur 1 nicht dargestellt ist, ist am Gehäuse 50 befestigt. Damit der Rasenmäher auch in eine horizontale Position aufgestellt werden kann, ist der Führungsholm wie in den Figuren 3a und 3b gezeigt um eine horizontale Schwenkachse verschwenkbar.

Bei einem handgeführten Rasenmäher kann eine Schalteinrichtung zum Einstellen einer unterschiedliche Motordrehzahl bevorzugt am in den Figuren 1 a und 1b dargestellten Führungsholm befestigt sein.

Um ein in Betrieb setzen des Rasenmähers in einer Nicht-Betriebs-Position, insbesondere in der vertikalen Position zu verhindern kann eine Sicherheitseinrichtung vorgesehen sein. Die Sicherheitsvorrichtung kann ein Schalter sein, der die Stromzufuhr zur Zündeinrichtung des Verbrennungsmotors unterbricht, wenn der Rasenmäher in einer Nicht-Betriebsposition, insbesondere in einer aufrechten Position abgestellt wird. Bevorzugt ist der Schalter nahe der horizontalen Schwenkachse um die bei einem handgeführten Rasenmäher der Führungsholm verschwenkt wird, angeordnet, so dass bei Verschwenken des Führungsholmes aus einer Betriebsposition in eine Nicht-Betriebsposition, die Stromzufuhr zur Zündung des Verbrennungsmotors unterbrochen wird. Der Mäher kann dann nicht mehr gestartet werden.

Um die Mähleistung zu erhöhen kann in einer bevorzugten Ausführungsform der Erfindung, die sich auf alle in den Fig. 2 bis 7 dargestellten Ausführungsformen bezieht eine besondere Art der Luftführung mit einem zweiten Ringraum vorgesehen sein. Die Gehäusevorderwand des Mähers in Fig. 6 ist mit 60 gekennzeichnet. Die

Gehäusevorderwand ist um eine Tiefe D gegenüber dem Schneidmesser nach unter gezogen und übernimmt somit eine Schutzfunktion.

Im Gehäuse ist des Weiteren ein erster Ringkanal 62 oberhalb der Messers 9 vorgesehen sowie ein zweiter Ringkanal 64. In den zweiten Ringkanal 64 strömt über eine Öffnung 66 bei atmosphärischem Druck Luft entlang Pfeil 70. Die Umfangswand 72 zwischen erstem Ringkanal 62 und zweitem Ringkanal 64 ist derart ausgestaltet, dass die im zweiten Ringkanal 64 über die Öffnung 60 einströmende Luft entlang dem Pfeil 70 unterhalb der Schneideinrichtung 9 wie mit vom zweiten Ringraum in den ersten Ringraum überführt wird. Diese Art der Luftführung unterstützt die Mähleistung und erlaubt niedrige Schnitthöhen. Des Weiteren ist zu sehen, dass die Unterkante 74 der Umfangswand 72 im Wesentlichen auf der Höhe der Schneideinrichtung endet. Dies führt dazu, dass die durch die Öffnung 66 einströmende Luft unter das Messer 9 geführt wird und so wie oben beschrieben die Mähleistung unterstützt wird. Anstelle eines Einströmens von Luft unter Atmosphären-Druck in einen zweiten Ringkanal 64 kann auch eine Art Kreislaufführung vorgesehen sein.

Der erste, innere Ringkanal 62 hat kreisförmigen Querschnitt. Er umschließt die Schneideinrichtung und damit das Messer 9 vollständig.

Im Gegensatz hierzu erstreckt sich der zweite, äußere Ringkanal 64, bevorzugt nur auf einem kleineren Kreisbogen um den ersten, inneren Ringkanal 62 herum. Der Umschlingungswinkel braucht nur wenige Grad zugetragen, beispielsweise 5 -10 Grad. Er wird in der Regel über 30 Grad betragen, möglicherweise auch bis zu 180 Grad.

Figur 7 zeigt eine Vorderansicht des Rasenmähers gemäß Figur 6. Gleiche Bauteile sind mit denselben Bezugsziffern belegt. Zu erkennen sind die beiden Schenkel 100.1 und 100.2 des Führungsholmes, sowie der Lufteinlass 66 in den zweiten Ringkanal. Des Weiteren zu erkennen sind die Befestigungsschrauben 102.1, 102.2 für die Schenkel 101.1 und 101.2 des Führungsholmes. Werden die Befestigungsschrauben gelöst kann der Führungsholm um die Verschwenkachse 104 verschwenkt werden, beispielsweise wie in Figur 1 a und 1 b gezeigt von der Betriebsposition in eine Aufbewahrungsposition.

Der erfindungsgemäße Rasenmäher stellt erstmals einen Rasenmäher mit Verbrennungsmotor zur Verfügung, der in beliebige Positionen aufstellbar ist, ohne dass Betriebsmittel wie Öl oder Kraftstoff austritt und sich durch eine einfache Bedienbarkeit und hohe Mähleistung auszeichnet.

## Patentansprüche

1. Rasenmäher;
umfassend
eine Schneideinrichtung, die ein Messer (9) aufweist;
einen Motor (1), wobei
der Motor eine Verbrennungskraftmaschine ist,
**dadurch gekennzeichnet, dass**
die Verbrennungskraftmaschine derart ausgestaltet ist, dass der Rasenmäher ohne Betriebsmittelverlust in allen möglichen Position aufstellbar ist.

2. Rasenmäher nach Anspruch 1,
**dadurch gekennzeichnet, dass** der Verbrennungsmotor einen Kraftstofftank mit einem Verschlussdeckel umfasst, wobei der Verschlussdeckel derart ausgestaltet ist, dass in einer ersten Position eine Luftöffnung vom Kraftstofftank in die Atmosphäre freigegeben wird und in einer zweiten Position die Luftöffnung verschlossen wird.

3. Rasenmäher nach Anspruch 2,
**dadurch gekennzeichnet, dass** der Verschlussdeckel zweiteilig ausgeführt ist und ein Deckelteil sowie ein Drehteil umfasst, wobei das Drehteil in wenigstens die erste und die zweite Position verbracht werden kann.

4. Rasenmäher nach Anspruch 3,
**dadurch gekennzeichnet, dass** das Drehteil eine Dichtung umfasst, die derart ausgestaltet ist, dass die Dichtung am Deckelteil anliegt und die Luftöffnung dicht verschlossen ist, wenn das Drehteil in die zweite Position verbracht wird.

5. Rasenmäher nach einem der Ansprüche 2 bis 4,
**dadurch gekennzeichnet, dass** die Luftöffnung eine Durchbohrung im Deckelteil ist.

6. Rasenmäher nach einem der Ansprüche 1 bis 5,
**dadurch gekennzeichnet, dass** der Verbrennungsmotor derart ausgestaltet ist, dass das Öl des Verbrennungsmotors beim Aufstellen in unterschiedliche Positionen nicht freigesetzt wird, insbesondere nicht in Motoranbauteile eindringt.

7. Rasenmäher nach Anspruch 6,
**dadurch gekennzeichnet, dass**
der Verbrennungsmotor derart ausgestaltet ist, dass das Öl des Verbrennungsmotors bei Aufstellen in unterschiedliche Positionen vollständig in der Ölwanne bzw. dem Motorblock verbleibt.

8. Rasenmäher nach einem der Ansprüche 1 bis 7,
**dadurch gekennzeichnet, dass** der Verbrennungsmotor einen Kraftstofftank mit einer leitenden Verbindung zu einem Vergaser aufweist, wobei in der leitenden Verbindung eine Kraftstoffauffangeinrichtung vorgesehen ist.

9. Rasenmäher nach Anspruch 8,
**dadurch gekennzeichnet, dass** die Kraftstoffauffangeinrichtung eine Verbindung zur Atmosphäre aufweist.

10. Rasenmäher nach Anspruch 8 oder 9,
**dadurch gekennzeichnet, dass** die Kraftstoffauffangeinrichtung eine leitende Verbindung zum Verbrennungsmotor aufweist.

11. Rasenmäher nach einem der Ansprüche 1 bis 10,
**dadurch gekennzeichnet, dass** der Verbrennungsmotor einen Kraftstofftank über eine Kraftstoffleitung mit dem Verbrennungsmotor verbunden ist, wobei die Kraftstoffleitung ein Absperrelement für die Kraftstoffzufuhr umfasst.

12. Rasenmäher nach einem der Ansprüche 1 bis 11,
**dadurch gekennzeichnet, dass** der Motor eine Abtriebswelle (3) und das Messer eine Antriebswelle (11) aufweist und
die Abtriebswelle (3) des Motors (1) mit der Antriebswelle (11) des Messers (9) über eine kraftübertragende Verbindung verbunden ist und
die kraftübertragende Verbindung eine Fliehkraftkupplung (7) umfasst.

13. Rasenmäher nach einem der Ansprüche 1 bis 12, **dadurch gekennzeichnet, dass** die Abtriebswelle (3) des Motors entlang einer ersten vertikalen Achse (5) verläuft.

14. Rasenmäher nach einem der Ansprüche 1 bis 13, **dadurch gekennzeichnet, dass** die Antriebswelle (11) des Messers entlang einer zweiten vertikalen Achse (13) verläuft.

15. Rasenmäher nach einem der Ansprüche 1 bis 14, **dadurch gekennzeichnet, dass** die Abtriebswelle (3) des Motors (1) entlang einer ersten vertikalen Achse (5) und die Antriebswelle (11) entlang einer zweiten vertikalen Achse (13) verläuft und erste und zweite Achse eine Abstand (A) zueinander aufweisen.

16. Rasenmäher nach einem der Ansprüche 12 bis 15, **dadurch gekennzeichnet, dass** die kraftübertragende Verbindung ein Riementrieb ist.

17. Rasenmäher nach Anspruch 16, **dadurch gekennzeichnet, dass** der Riementrieb eine an die Verbrennungskraftmaschine angepasste Untersetzung aufweist, so dass an der Schneideinrichtung ein vorbestimmtes Drehmoment erreicht wird.

18. Rasenmäher nach Anspruch 17, **dadurch gekennzeichnet, dass** die Untersetzung im Bereich von 1:1,2 bis 1:6, vorzugsweise im Bereich von 1:1, 5 bis 1:3, insbesondere im Bereich von 1:1,8 bis 1:2,2 liegt.

19. Rasenmäher nach einem der Ansprüche 12 bis 18, **dadurch gekennzeichnet, dass** die Fliehkraftkupplung (7) und der Riementrieb von einem Gehäuse umgeben sind.

20. Rasenmäher nach einem der Ansprüche 1 bis 19, **dadurch gekennzeichnet, dass** die Verbrennungskraftmaschine ein Benzinmotor, wobei die Motordrehzahl im Bereich 500 bis 7500 U/min liegt.

21. Rasenmäher nach einem der Ansprüche 1 bis 20,
**dadurch gekennzeichnet, dass**
der Rasenmäher einen ersten Ringkanal (62) aufweist, wobei erste der Ringkanal (62) eine die Schneideinrichtung umgebende Umfangswand (72) aufweist, die den Flugkreis des Messers (9) umgibt sowie einen zweiten Ringkanal (64), der den ersten Ringkanal (62) wenigstens auf einem Teil von dessen Umfang umgibt und der aus der Umfangswand (72) und einer Gehäusevorderwand (60) des Mähers gebildet wird, wobei der zweite Ringkanal (64) wenigstens eine Öffnung (66) zum Zuführen von Luft aufweist und der zweite Ringkanal mit einem Raum unterhalb des Messers in leitender Verbindung steht.

22. Rasenmäher nach Anspruch 21, **dadurch gekennzeichnet, dass**
die Öffnung (66) des zweiten Ringkanals (64) eine Außenöffnung, die in direkter leitender Verbindung mit der Atmosphäre steht, ist.

23. Rasenmäher nach einem der Ansprüche 21 bis 22, **dadurch gekennzeichnet, dass** sich die Unterkante (74) der Umfangswand (72) im Wesentlichen auf der Höhe des Messers (9) befindet.

24. Rasenmäher nach einem der Ansprüche 21 bis 23, **dadurch gekennzeichnet, dass** der Abstand zwischen der Umfangswand (72) und dem Flugkreis des Messers (9) zwischen einem und 20 mm beträgt.

25. Rasenmäher nach einem der Ansprüche 1 bis 24, **dadurch gekennzeichnet, dass** das Messer (9) höhenverstellbar ist, insbesondere derart, dass Schnitthöhen geringer als 20 mm eingestellt werden können.

26. Rasenmäher nach einem der Ansprüche 1 bis 25, **dadurch gekennzeichnet, dass** der Rasenmäher eine Schalteinrichtung umfasst, mit der die Umdrehungsdrehzahl des Messers (9) auf mindestens zwei Werte eingestellt werden kann.

27. Rasenmäher nach einem der Ansprüche 1 bis 26, **dadurch gekennzeichnet, dass** die Schalteinrichtung einen Einstellschalter umfasst, der die Drehzahl des Motors (1) einstellt.

28. Rasenmäher nach einem der Ansprüche 1 bis 27, **dadurch gekennzeichnet, dass** der Rasenmäher eine Sicherheitseinrichtung umfasst, wobei die Sicherheitseinrichtung das Inbetriebsetzen des Motors (1) in Nicht-Betriebspositionen verhindert.

29. Rasenmäher nach Anspruch 28,
**dadurch gekennzeichnet, dass** die Sicherheitseinrichtung einen Schalter umfasst, der die Stromzufuhr zur Zündung unterbricht.

30. Rasenmäher nach einem der Ansprüche 1 bis 29, **dadurch gekennzeichnet, dass** der Rasenmäher einen Führungsholm (200) umfasst, der um eine Achse (104) verschwenkbar ist.

31. Rasenmäher nach einem der Ansprüche 1 bis 30,
**dadurch gekennzeichnet, dass** der Rasenmäher ein Gehäuse (202) umfasst, das einen Grasfangkorb umschließt.
